Europäisches Patentamt

**European Patent Office**

**Office européen des brevets**

(19)

(11) Numéro de publication: **0 251 831 B1**

## FASCICULE DE BREVET EUROPEEN

(12)

(45) Date de publication de fascicule du brevet:
**04.12.91**

(51) Int. Cl.⁵: **H01G 4/30**

(21) Numéro de dépôt: **87401119.0**

(22) Date de dépôt: **19.05.87**

(54) **Condensateur multicouche.**

(30) Priorité: **30.05.86 FR 8607824**

(43) Date de publication de la demande:
**07.01.88 Bulletin 88/01**

(45) Mention de la délivrance du brevet:
**04.12.91 Bulletin 91/49**

(84) Etats contractants désignés:
**BE DE FR IT SE**

(56) Documents cités:
**EP-A- 0 108 211
EP-A- 0 191 668
DE-A- 1 911 156
DE-A- 2 921 409
GB-A- 712 650**

**IBM TECHNICAL DISCLOSURE BULLETIN, vol.
9, no. 12, mai 1967, page 1738, New York, US;
B.E. HART: "Low-inductance capacitor"**

(73) Titulaire: **CIMSA SINTRA
60, quai de Valmy
F-92400 Courbevoie(FR)**

(72) Inventeur: **Arnould, Guy
THOMSON-CSF SCPI 19, avenue de Messine
F-75008 Paris(FR)**

(74) Mandataire: **Benoit, Monique et al
THOMSON-CSF SCPI
F-92045 PARIS LA DEFENSE CEDEX 67(FR)**

EP 0 251 831 B1

## Description

La présente invention concerne les condensateurs multicouche et plus particulièrement un condensateur multicouche de forte valeur de capacité, selon la première partie de la revendication 1 (voir DE-A-1911156).

Dans certaines applications et notamment dans les alimentations à découpage modulaires, la modularité a permis l'utilisation de condensateur de plus faible valeur par rapport aux condensateurs utilisés dans les alimentations monolithiques, mais ces condensateurs restent malgré tout des condensateurs de forte capacité de 10 à 100 μF. Pour diminuer l'encombrement de ces alimentations modulaires on utilise de plus en plus des chips capacitifs, c'est-à-dire des condensateurs plans constitués de couches conductrices, séparées par des couches isolantes. Or plus la capacité doit être importante et plus les dimensions du condensateur doivent également être importantes. Il s'avère qu'à partir de certaines valeurs de capacité, il n'est plus possible d'obtenir un condensateur du type chip ayant les performances requises car l'inductance et la résistance qui sont proportionnelles aux dimensions des armatures sont nuisibles au fonctionnement. Ces deux éléments parasites contribuent à diminuer la fréquence de coupure du condensateur d'une part et l'amplitude des courants efficaces par effet Joule d'autre part.

Généralement, pour obtenir une diminution de ces deux paramètres on augmente la longueur de la connexion réalisée sur deux tranches opposées du chip, et on diminue la distance entre ces deux connexions pour conserver une même surface d'armature. La longueur des armatures (définie par le trajet du courant) est réduite dans une proportion inverse à celle de la largeur, le condensateur a ainsi une forme allongée. La diminution de l'inductance est proportionnelle au rapport de la diminution de la distance entre les connexions et la diminution de la résistance est proportionnelle au carré de ce rapport. Cependant, l'augmentation de la longueur (longueur des connexions) et la diminution de la largeur du chip capacitif (distance entre connexions) a des limites dues au fait que le condensateur devient trop fragile à la torsion. La réalisation de chip capacitif de forte capacité se trouve donc limitée par ce problème mécanique ce qui est un inconvénient dans la mesure ou on cherche de plus en plus à utiliser ce type de condensateur pour contribuer à la miniaturisation des alimentations à découpage.

La présente invention permet de remédier à cet inconvénient en proposant un condensateur multicouche qui, pour une capacité donnée, a une inductance parasite et une résistance parasite inférieure à celles de l'art antérieur tout en ayant le même encombrement. L'invention consiste à multiplier le nombre de connexions et à entrelacer les connexions de polarité opposées des deux tranches.

Plus précisément, la présente invention a pour objet un condensateur multicouche tel que défini par la revendication 1.

D'autres particularités et avantages de l'invention apparaîtront mieux à la lecture de la description détaillée qui suit et se réfère aux dessins annexés, donnés uniquement à titre d'exemple non limitatif et dans lesquels :
- la figure 1 représente le schéma d'un condensateur selon l'invention;
- la figure 2, représente le schéma de deux armatures vues de dessus du condensateur selon l'invention;
- la figure 3, représente une vue de côté du condensateur selon l'invention;
- la figure 4, représente un exemple d'implantation du condensateur selon l'invention;
- la figure 5, représente le schéma électrique équivalent du condensateur selon la figure 4;
- la figure 6, représente un autre exemple d'implantation du condensateur selon l'invention;
- la figure 7, représente les courbes d'impédance de deux condensateurs selon l'art antérieur et une courbe d'impédance d'un condensateur selon l'invention.

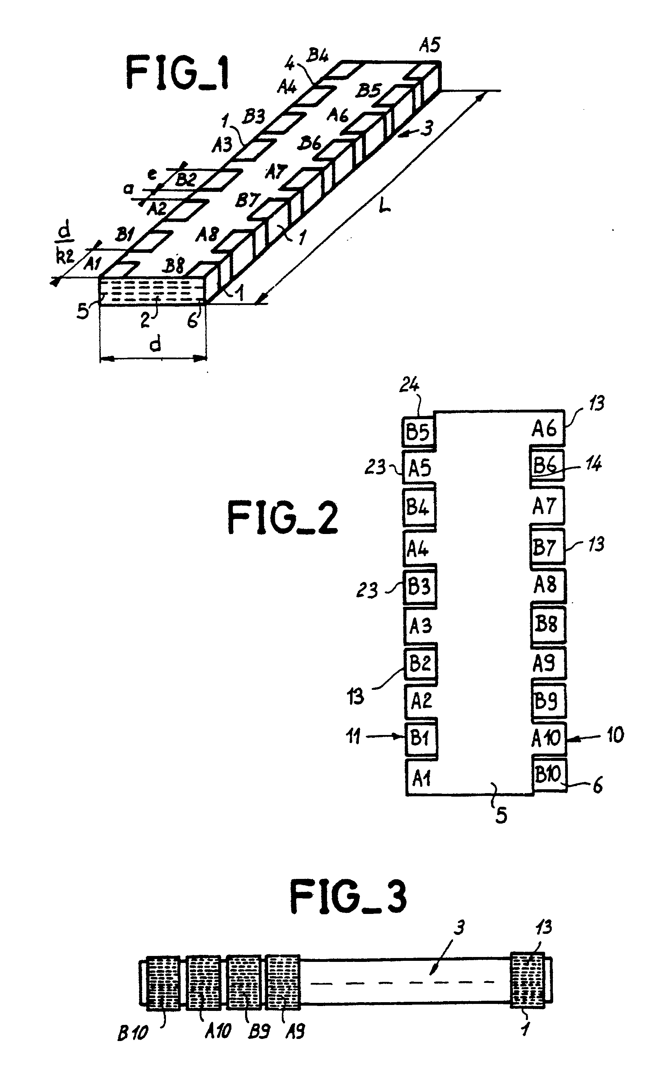

Sur la figure 1, on a représenté en perspective le chip capacitif multicouche selon l'invention. Sur cette figure le chip est représenté sous la forme d'un microboîtier céramique permettant le montage à plat par exemple. D'autres représentations et modes de montage sont décrits dans ce qui suit la description de cette figure. Le condensateur comporte deux rangées de connexions externes 1. La distance entre les connexions 1 placées sur les deux tranches du condensateur est référencée d, la longueur de la tranche est référencée L, L étant plus grand que d. Par rapport aux condensateurs multicouche de forme allongée de l'art antérieur ces deux valeurs restent les mêmes pour une capacité C donnée. Par rapport à la forme plus massive des condensateurs avant la conception d'un condensateur de forme allongée, la largeur d est $k_1$ fois plus petite que la largeur du condensateur de forme massive et sa longueur L est $k_1$ fois plus grande pour une capacité donnée.

Le condensateur est constitué d'une pluralité d'armatures 5, 6 superposées et séparées entre elles par un isolant 2.

La forme des armatures 5 et 6 est telle que le condensateur comporte une pluralité de liaisons électriques correspondant aux connexions 1 situées sur les deux tranches 3, 4. La largeur de ces connexions est référencée e et l'espace entre deux connexions successives placées sur une même tranche est référencé a. La distance (e + a) est égale à d/k$_2$ (le coefficient k$_2$ étant supérieur à k$_1$). Soit donc C la capacité du condensateur selon une forme massive (de l'art antérieur), D sa largeur, l sa longueur, ce condensateur a une inductance propre L$_S$ et une résistance propre R$_S$. Pour cette même capacité C, un condensateur de longueur L = k$_1$ l et de largeur

$$d = \frac{D}{k_1},$$

l'inductance propre est égale à

$$\frac{L_S}{k_1}$$

et la résistance propre est égale à

$$\frac{R_S}{k_1^2}.$$

Pour cette même capacité C, le condensateur selon l'invention a une longueur L = k$_1$l une largeur

$$d = \frac{D}{k_1},$$

und inductance propre égale à

$$\frac{L_S}{k_2}$$

et une résistance propre

$$\frac{R_S}{k_2^2},$$

k$_2$ étant supérieur à k$_1$. L'inductance propre et la résistance propre du condensateur sont donc diminuées dans le rapport k$_2^2$, k$_2$ défini par l'espacement entre deux points situés au milieu respectivement de la largeur de chaque connexion.

Sur la figure 2, on a représenté l'exemple de réalisation des armatures du condensatuer, deux armatures seulement ont été représentées pour simplifier.

Les armatures 5 et 6 sont découpées respectivement sur leurs bords longitudinaux 10 et 11. Les bords constituent les deux tranches 3, 4 du condensateur lorsque les armatures sont toutes empilées.

Les bords 10 et 11 présentent un découpage en forme de créneau de manière à présenter alternativement sur chaque bord une zone pleine 13, 23 et une zone vide 14, 24. Le découpage des deux armatures 5 et 6 est tel que lorsqu'elles sont superposées une zone pleine 13 du bord 10 de l'armature 5 se trouve au dessus d'une zone vide 14 de l'armature 6 et inversement une zone pleine 13 de l'armature 6 se trouve au dessous d'une zone vide 14 de l'armature 5. Une zone pleine 23 du bord 11 de l'armature 5 se trouve au dessus d'une zone vide 24 de l'armature 6 et inversement une zone pleine 23 de l'armature 6 se trouve au dessous d'une zone vide 24 de l'armature 5.

Le condensateur comporte donc un ensemble d'armatures du type de l'armature référencée 5, entre deux armatures de ce type est intercalée une armature du type de l'armature référencée 6. Les armatures sont bien entendu séparées entre elles par un isolant 2.

Les parties pleines des armatures de même type qui se trouvent sur la même tranche sont reliées électriquement par des plaques 1 de manière à former une pluralité de connexions comme cela est représenté sur la figure 3. En effet les languettes 13, 23 qui se trouvent superposées sont reliées entre elles par une plaque 1 pour former une connexion par exemple A6 ou A5 ou B6 ou B3. Cette figure représente par exemple la tranche 3. Sur l'autre face, c'est-à-dire la tranche 4, la disposition des zones pleines et vides est alternée. Comme cela a été décrit pour la figure 2 lorsque l'on a une zone vide 14 sur la tranche 3 formée par les bords 10 des armatures 5, on a une zone pleine 23, au même niveau, sur la tranche 4 formée. Lorsque l'on a une zone vide 14 sur la tranche 3 formée par les bords 10 de l'armature 5, on a une zone pleine 23, au même niveau, sur la tranche 11.

On obtient ainsi des connexions avec des polarités A, B opposées alternativement sur chaque tranche.

Le condensateur est équivalent à une pluralité de chips en parallèle. La capacité totale est égale à la somme des capacités de chaque chip, l'inductance propre et la résistance propre ont été diminuées dans le rapport K$_2$, K$_2^2$ indiqué précédemment (K$_1$ = 1, K$_2$ = 10).

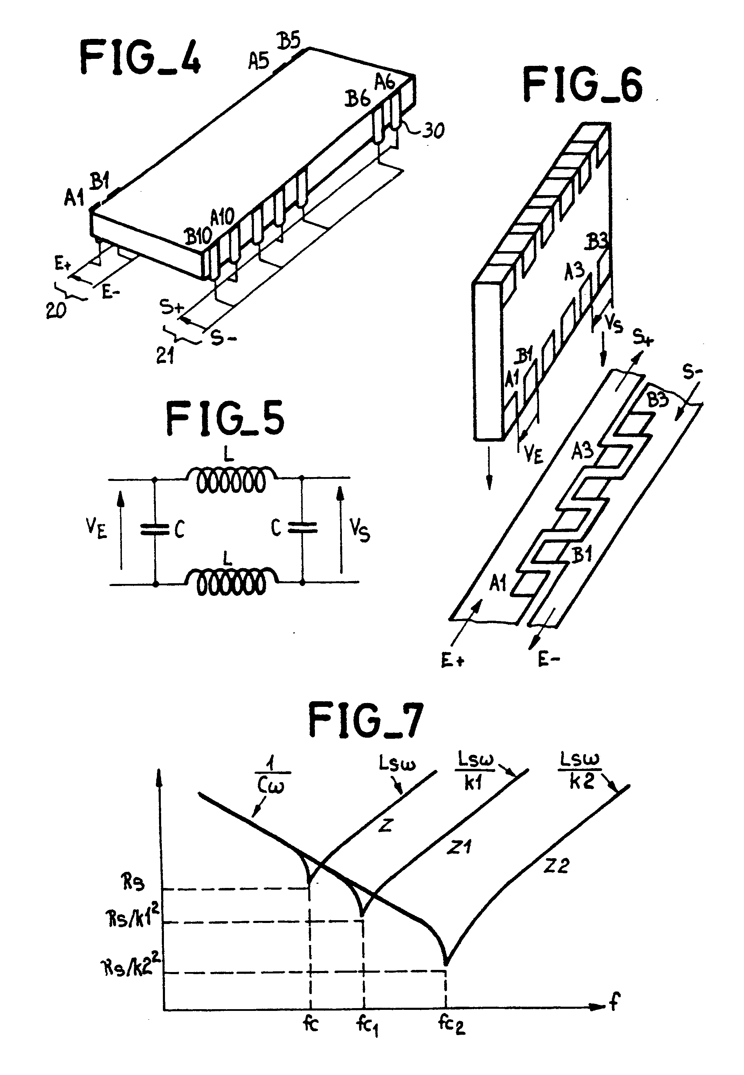

Sur la figure 4 on a indiqué un mode d'implantation du chip selon l'invention. Les connexions de même polarité A1-A5 d'une même tranche 11 sont connectées à la borne positive E + d'une alimentation. Les connexions de polarité opposées B1-B5 sont reliées à la borne négative E-. Une tension VE est appliquée entre ces deux points. Deux fils d'une ligne 20 permettent d'appliquer cette tension entre les connexions.

Sur l'autre tranche 10 les connexions de même polarité A6-A10 sont reliées à un fil d'une ligne 21, les connexions de polarité opposées B6-B10 sont reliées à l'autre fil de cette ligne 21. La tension de sortie VS est prise entre les deux points S + et S-.

Le report est effectué, par exemple, sur un circuit imprimé sur lequel sont imprimés les fils d'alimentation, le condensateur se présentant sous la forme d'un circuit intégré comportant deux rangées de picots 30 comme cela est représenté sur cette figure. Les picots sont connectés à des plaques métalliques 1 reliant les armatures.

Le condensateur se comporte comme un quadri pôle au lieu d'un dipôle (selon l'art antérieur). Son schéma électrique est représenté sur la figure 5, grâce à l'inductance L des armatures du condensateur et au fait que les connexions de polarité opposées sont alternées. Le condensatuer permet d'assurer un bon découplage entre un circuit permutateur placé à l'entrée du quadripôle et un circuit sensible placé à la sortie de ce quadripôle. Le condensateur peut également être reporté sur le circuit imprimé à plat ou sur la tranche.

Sur la figure 6, on représenté un exemple d'implantation sur la tranche du condensateur sur un circuit imprimé. On applique pour cela une tension VE entre les connexions A1, B1 (entrée du quadripôle) et on a la tension de sortie VS entre les bornes A3, B3 (sortie du quadripôle).

Sur la figure 7 on a représenté la courbe d'impédance Z2 du condensatuer selon l'invention en fonction de la fréquence de résonance c'est-à-dire la fréquence de coupure. On a également représenté les courbes Z et Z1 de condensateur selon l'art antérieur. La courbe Z représente l'impédance d'un condensateur de forme massive, la courbe Z1 représente l'impédance d'un condensateur de forme allongée selon l'art antérieur. On constate sur ces courbes que le terme résistif est plus faible que dans l'art antérieur et qu'il est égal à $RS/k_2^2$ à la fréquence de résonance $f_{C2}$, cette fréquence étant plus élevée. La diminution de ce terme résistif permet de passer des courants efficaces plus importants. Le condensateur se comporte comme une capacité pure au-delà des fréquences de résonance $f_C$ et $f_{C1}$ puisque sa fréquence de résonance $f_{C2}$ est supérieure. Au-delà de cette fréquence $f_{C2}$ il se comporte comme une inductance pure de valeur inférieure pour une même fréquence f (ou une même pulsation $\omega$).

Les dimensions du condensateur sont parfaitement adaptées aux boîtiers des circuits intégrés dual-in-line. Le condensateur peut par conséquent se présenter sans la forme d'un circuit intégré dual-in-line, avec deux rangées de picots, chaque picot étant relié à une connexion comme cela est représenté sur la figure 4. Il peut également se présenter sous la forme d'un microboîtier céramique comportant deux rangées de connexions externes pour le montage à plat (figure 1) ou sur la tranche (figure 6).

## Revendications

1. Condensateur multicouche comportant un premier et un deuxième ensemble d'armatures empilées, des couches d'isolant entre chaque armature, les armatures (5) du premier ensemble étant reliées électriquement entre elles et étant intercalées entre les armatures (6) du deuxième ensemble, ces dernières étant également reliées électriquement entre elles, chaque armature (5, 6) du premier et deuxième ensembles étant constituée par une plaque dont deux bords (10, 11) sont découpés de manière à avoir alternativement une partie pleine (13) formant languette et une partie vide (14), l'alternance étant opposée entre une armature (5) du premier ensemble et une armature (6) du deuxième ensemble ; le condensateur étant caractérisé par le fait que chacune des plaques formant armature est de forme allongée, les languettes étant réalisées sur les bords les plus longs et de sorte que les languettes soient alternées d'un bord par rapport à l'autre, que les languettes des armatures du premier ensemble (5) sont reliées électriquement entre elles par des moyens conducteurs (1) disposés sur la tranche de l'empilement et reliant entre eux les bords desdites languettes superposées pour former un premier ensemble (A1-A5, A6-A10) de connexions du condensateur et être reliées à un premier potentiel, et que les languettes des armatures du deuxième ensemble (6) sont reliées électriquement entre elles par des moyens conducteurs (1) disposés sur la tranche de l'empilement et reliant entre eux les bords desdites languettes superposées pour former un deuxième ensemble (B1-B5, B6-B10) de connexions du condensateur et être reliées à un deuxième potentiel, les polarités des connexions sur chaque bord étant ainsi alternées.

2. Condensateur selon la revendication 1 caractérisé par le fait que les moyens sont constitués par des plaques conductrices.

3. Condensateur selon la revendication 1 ou 2, caractérisé par le fait qu'il est réalisé sous la forme d'un circuit intégré comportant deux rangées de picots (DIL) (30).

4. Condensateur selon l'une quelconque des revendications 1 ou 3, caractérisé par le fait qu'il est réalisé sous la forme d'un microboîtier céramique comportant deux rangées de connexions externes (1).

**Claims**

1. A multilayer capacitor comprising a first and a second set of stacked electrodes, layers of insulating material between each electrode, the electrodes (5) of the first set being connected electrically with each other and being positioned between the electrodes (6) of the second set, the latter being also connected electrically with each other, each electrode (5 and 6) of the first set and of the second set being constituted by a plate member whose two edges (10 and 11) are cut in such a manner as to alternatively present a full part (13) in the form of a tongue and a gap (14), such alternation being such that there is an opposite relationship between one electrode (5) of the first set and an electrode (6) of the second set; the capacitor being characterized in that each of the plate members constituting an electrode has an elongated form, the tongues being produced on the longest edges and in this manner the tongues alternate between one edge and the other, in that the tongues of the electrodes of the first set (5) are electrically connected with each other by conducting means (1) positioned on the edge of the stack and connecting between them the edges of the said superposed tongues in order to constitute a first set ($A_1$ to $A_5$ and $A_6$ to $A_{10}$) of the connections of the capacitor and being connected with a first potential, and in that the tongues of the electrodes of the second set (6) are electrically connected with each other by conducting means (1) positioned on the edge of the stack and with each other connect the edges of the said superposed tongues in order to constitute a second set ($B_1$ to $B_5$ and $B_6$ to $B_{10}$) of connections of the capacitor and connected with a second potential, the polarities of the connections on each edge thus being alternated.

2. The capacitor as claimed in claim 1, characterized in that the means are constituted by conducting plate members.

3. The capacitor as claimed in claim 1 or in claim 2, characterized in that it is manufactured in the form of an integrated circuit comprising two rows of pins (DIL) (30).

4. The capacitor as claimed in claim 1 or in claim 3, characterized in that it is manufactured in the form of a ceramic microenclosure comprising two rows of external connections (1).

**Patentansprüche**

1. Mehrschichtkondensator, mit einer ersten und einer zweiten Gruppe von übereinandergeschichteten Belägen und Isolierschichten zwischen jedem Belag, wobei die Beläge (5) der ersten Gruppe miteinander elektrisch verbunden sind und zwischen die Beläge (6) der zweiten Gruppe eingeschoben sind, wobei diese letzteren ebenfalls miteinander elektrisch verbunden sind, wobei jeder Belag (5, 6) der ersten und der zweiten Gruppe von einer Platte gebildet wird, von der zwei Ränder (10, 11) so ausgestanzt sind, daß sie abwechselnd einen eine Lasche bildenden massiven Teil (13) und einen leeren Teil (14) besitzen, wobei der Wechsel zwischen einem Belag (5) der ersten Gruppe und einem Belag (6) der zweiten Gruppe entgegengesetzt ist; wobei der Kondensator dadurch gekennzeichnet ist, daß jede der einen Belag bildenden Platten eine gestreckte Form besitzt, wobei die Laschen an den längeren Seiten verwirklicht sind, derart, daß die Laschen eines Randes in bezug auf die andere wechselseitig versetzt sind, daß die Laschen der Beläge der ersten Gruppe (5) miteinander durch leitende Mittel (1) elektrisch verbunden sind, die an der Schmalseite des Schichtenstapels angeordnet sind und die Ränder der übereinandergelagerten Laschen miteinander verbinden, um eine erste Gruppe ($A_1$-$A_5$, $A_6$-$A_{10}$) von Kondensatorverbindungen zu bilden, und mit einem ersten Potential verbunden sind, und daß die Laschen der Beläge der zweiten Gruppe (6) miteinander durch leitende Mittel (1) elektrisch verbunden sind, die an der Schmalseite des Schichtenstapels angeordnet sind und die Ränder der übereinandergelagerten Laschen miteinander verbinden, um eine zweite Gruppe ($B_1$-$B_5$, $B_6$-$B_{10}$) von Kondensatorverbindungen zu bilden, und mit einem zweiten Potential verbunden sind, wobei somit die Polaritäten der Verbindungen an jedem Rand wechseln.

2. Kondensator gemäß Anspruch 1, dadurch gekennzeichnet, daß die Mittel von leitenden Platten gebildet werden.

3. Kondensator gemäß Anspruch 1 oder 2, dadurch gekennzeichnet, daß er in Form einer integrierten Schaltung verwirklicht wird, die zwei Reihen von Kontaktspitzen (DIL) (30) aufweisen.

4.  Kondensator gemäß einem der Ansprüche 1 oder 3, dadurch gekennzeichnet, daß er in Form eines keramischen Mikrogehäuses verwirklicht ist, das zwei Reihen von externen Verbindungen (1) aufweist.

# FIG_1

# FIG_2

# FIG_3

# FIG_4

# FIG_6

# FIG_5

# FIG_7